Europäisches Patentamt

European Patent Office

Office européen des brevets

(19)

(11) Veröffentlichungsnummer: **0 181 522**
**A2**

(12) ## EUROPÄISCHE PATENTANMELDUNG

(21) Anmeldenummer: **85113216.7**

(22) Anmeldetag: **18.10.85**

(51) Int. Cl.⁴: **A 01 L 3/00**
**A 01 L 5/00**

(30) Priorität: **13.11.84 DE 3441417**

(43) Veröffentlichungstag der Anmeldung:
**21.05.86 Patentblatt 86/21**

(84) Benannte Vertragsstaaten:
**AT BE CH DE FR GB IT LI LU NL SE**

(71) Anmelder: **Stübbe, Peter**
**Schenkenberger Weg 17**
**D-2061 Bliestorf(DE)**

(72) Erfinder: **Stübbe, Peter**
**Schenkenberger Weg 17**
**D-2061 Bliestorf(DE)**

(74) Vertreter: **Schaefer, Konrad**
**Gehölzweg 20**
**D-2000 Hamburg 70(DE)**

(54) **Pferdehufschuh.**

(57) Ein Hufschuh für Pferde besteht aus einem biegeelastischen Metallrandprofil, das über elastische Halterungsmittel an der Außenfläche des Hufes befestigt ist und über Vorsprünge mit einer elastischen Sohle lösbar verbunden ist, die in Umfangsform des Hufes vorgefertigt ist.

Fig. 4

EP 0 181 522 A2

Croydon Printing Company Ltd

PATENTANWALT
DIPL. PHYS. K. SCHAEFER
(DIPL. ING. H. SCHAEFER bis 1978 )

D-2000 HAMBURG 70, GRENZWEG 2
POSTFACH (P.O. BOX) 70 15 42
TELEFON: (040) 6 56 20 51
TELEX: 2 164 966 pats d
TELEGRAMMADRESSE: PATENTIWE
17. Oktober 1985
UNSER ZEICHEN. KSch/E

PATENTANWÄLTE SCHAEFER, POSTFACH 70 15 42, D-2 HAMBURG 70
IHR ZEICHEN

- 2 -

Peter Stübbe,
Schenkenberger Weg 17, D-2061 Bliestorf.

Pferdehufschuh

Die Erfindung betrifft einen Pferdehufschuh der im Oberbegriff des Anspruches 1 genannten Art.

Derartige Pferdehufschuhe zeichnen sich durch äußerst einfache Anbringung am Huf aus, wobei lediglich eine Klebebefestigung auf der Hufaußenfläche vorzunehmen ist. Der Hufschuh kann durch Lösen der Klebebefestigung abgenommen und später wieder angesetzt werden. Die sowohl in Aufstandsrichtung als auch im Umfang elastische Konstruktion sichert den Pferdehuf vor zu starken Stoßbelastungen, beispielsweise auf hartem Grund, und ermöglicht beim Laufen die notwendigen Spreizbewegungen des Hufes, die dessen Gesundheit sichern.

Ein Hufschuh der eingangs genannten Art ist aus der DE-OS 28 15 374 bekannt. Bei dieser Konstruktion erfolgt die Befestigung des Metallprofiles an der Sohle durch Angießen der Sohle an das Metallprofil. Dies erfordert jedoch eine aufwendige Herstellung. Es muß zunächst das Metallprofil in die individuelle Hufform vorgebogen werden und sodann das Sohlenmaterial in einer Gußform eingegossen werden. Diese Arbeiten lassen sich nur fabrikmäßig durchführen. Es muß also ein Hufabdruck genommen, an die Fabrik eingeschickt und dort der Hufschuh erstellt werden. Diese Arbeiten sind langwierig und kostenintensiv.

Die Aufgabe der vorliegenden Erfindung besteht darin, einen Hufschuh der eingangs genannten Art zu schaffen, der einfacher und kostengünstiger herstellbar ist.

Diese Aufgabe wird erfindungsgemäß mit den Merkmalen des Kennzeichnungsteiles des Anspruches 1 gelöst.

Bei der erfindungsgemäßen Konstruktion wird die Sohle aus einem Halbfabrikat passend zur individuellen Umfangsform des jeweiligen Pferdehufes zugeschnitten. Die Verbindung der Sohle mit dem Metallrandprofil erfolgt durch Aufstecken der Sohle auf die Vorsprünge. Dadurch wird eine formschlüssige Verbindung zwischen diesen beiden Teilen geschaffen, die einfach herstellbar und auch einfach wieder lösbar ist. Ein Gießvorgang, wie er bei der bekannten Konstruktion erforderlich ist, entfällt. Die Herstellung ist wesentlich einfacher. Nachdem die Sohle mit passender Umfangsform zugeschnitten ist, kann das Metallprofil in einfacher Weise um die Sohle herum gezogen werden, so daß eine besondere Biegelehre zum Biegen des Metallprofiles nicht erforderlich ist. Wenn der Hufschuh am Huf durch Verkleben der Halterungsmittel an der Hufaußenfläche befestigt ist, wird die Sohle zwischen den Laufflächensegmenten des Metallprofiles und der Sohle des Hufes in vertikaler Richtung sicher gehalten. In Richtung der Sohlenebene wird die Sohle auf den Vorsprüngen formschlüssig gehalten. Es ergibt sich also eine sichere Verbindung von Sohle und Metallprofil, die bei den Stoßbelastungen während des Laufens nicht gelöst wird. Durch den gegenseitigen Eingriff zwischen Sohle und Metallprofil ergänzen sich diese beiden Teile hinsichtlich der Festigkeit gegen Stöße. Beide Teile können etwas federn und erlauben dem Huf physiologisch wichtige Eigenbewegungen. Die Konstruktion federt aber stets wieder in die ursprüngliche Form zurück und sichert den festen Sitz am Huf. Das Abreißen der verklebten Halterungsmittel vom Huf wird mit Sicherheit vermieden, da das Metallprofil mit der seitlich über die Hufaußenfläche hochragenden Außenwand in Richtung der Sohlenebene in sicherum Formschluß mit dem Huf steht. Seitliche Verschiebungen des Hufschuhes gegenüber dem Huf, die zum Abreißen führen könnten, werden also vermieden.

Die erfindungsgemäße Konstruktion zeichnet sich insbesondere dadurch aus, daß sie mit einfachsten Mitteln, wie Hammer und Messer vor Ort aus Halbfabrikaten (Endlosprofil, Kunststoffplatte) angefertigt werden können, ohne komplizierte Fabrikeinrichtungen, wie z. B. Kunststoffgießeinrichtungen und -formen erforderlich zu machen.

Weiterhin vorteilhaft sind die Merkmale des Anspruches 2 vorgesehen. Auf diese Weise sind die Vorsprünge in lochartigen Ausnehmungen der Sohle in Richtung der Sohlenebene allseitig umschlossen, so daß auch in Umfangsrichtung des Hufschuhes die Sohle und das Metallprofil in allen Richtungen verschiebungssicher gegeneinander gehalten sind, womit die Formstabilität des Hufschuhes in der erwünschten individuellen Hufsohlenform gewährleistet bleibt.

Weiterhin vorteilhfat ist der erfindungsgemäße Hufschuh durch die Merkmale des Anspruches 3 gekennzeichnet. Diese Konstruktion zeichnet sich durch besondere Einfachheit aus. Die Bolzen können am Metallprofil vorgefertigt sein oder beispielsweise als Schraubbolzen in Gewindebohrungen der Lauffflächensegmente je nach Wunsch eingeschraubt werden. Die Bohrungen in der Sohle können ebenfalls sehr einfach an der je nach individueller Hufform erforderlichen Stelle angebracht werden.

Weiterhin vorteilhaft sind die Merkmale des Anspruches 4 vorgesehen. Derartige Vorsprünge mit selbstschneidender Spitze können in unvorbereitetes Sohlenmaterial eingeschnitten werden. Es müssen also in der Sohle keine gesonderten Ausnehmungen vorgesehen sein. Die Sohle wird hierbei einfach auf das Metallprofil aufgelegt und nach unten gedrückt, wobei sich die Vorsprünge in die Sohle einschneiden.

Dabei sind vorteilhaft die Merkmale des Anspruches 5 vorgesehen. Durch die Widerhaken an den selbstschneidenden Spitzen der Vorsprünge wird die Sohle auch in vertikaler Richtung fest am Metallprofil gehalten, was insbesondere für die Zwecke der Montage von Vorteil ist.

Weiterhin vorteilhaft sind die Merkmale des Anspruches 6 vorgesehen. Die Vorsprünge in Form von einschraubbaren Schrauben lassen sich sehr einfach und individuell jeweils an der gewünschten Stelle am Metallprofil anbringen.

Schließlich ist der erfindungsgemäße Hufschuh vorteilhaft durch die Merkmale des Anspruches 7 gekennzeichnet. Eine solche Sohlenkonstruktion läßt den inneren Teil der Hufsohle im wesentlichen frei, so daß diese gut zugänglich ist und trocknen kann. Der Querriegel liefert jedoch den notwendigen Kreisschluß des Hufschuhes an seinen hinteren Enden, der das zu weite Aufspreizen bei Laufbelastungen verhindert.

In den Zeichnungen ist die Erfindung beispielsweise und schematisch dargestellt. Es zeigen:

Fig. 1    eine Seitenansicht eines am Huf befestigten Hufschuhes,

Fig. 2    eine Ansicht von unten gegen die Sohle der Anordnung gemäß Fig. 1,

Fig. 3    eine Draufsicht auf die Sohle der Konstruktion der Fig. 1 und 2,

Fig. 4    einen Schnitt nach Linie 4 - 4 in Fig. 3,

Fig. 5    eine Draufsicht auf das Metallprofil,

Fig. 6 und 7    Darstellungen, entsprechend Figuren 4 und 5 einer anderen Ausführungsform der Formschlußverzahnung,

Fig. 8 und 9    in entsprechender Darstellung eine weitere Ausführungsform der Formschlußverzahnung,

Fig. 10 und 11  in entsprechender Darstellung eine weitere Ausführungsform der Formschlußverzahnung,

Fig. 12    eine Ansicht in Richtung des Pfeiles 50 in Figur 11 und

Fig. 13    eine weitere Ausführungsform der Formschlußverzahnung in Darstellung  entsprechend Fig.4.

- 7 -

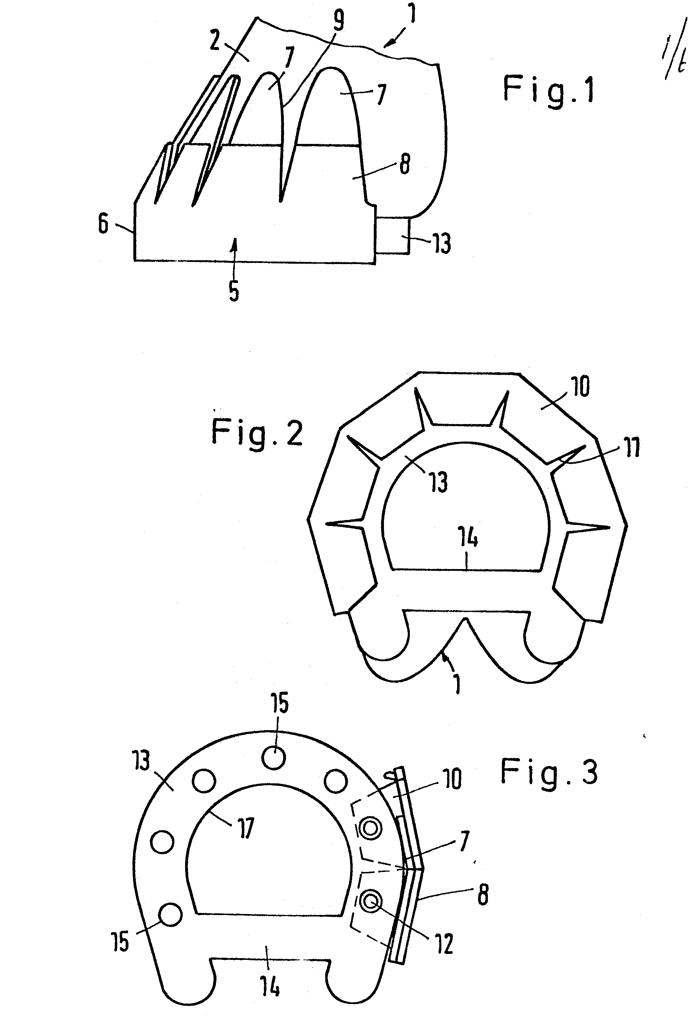

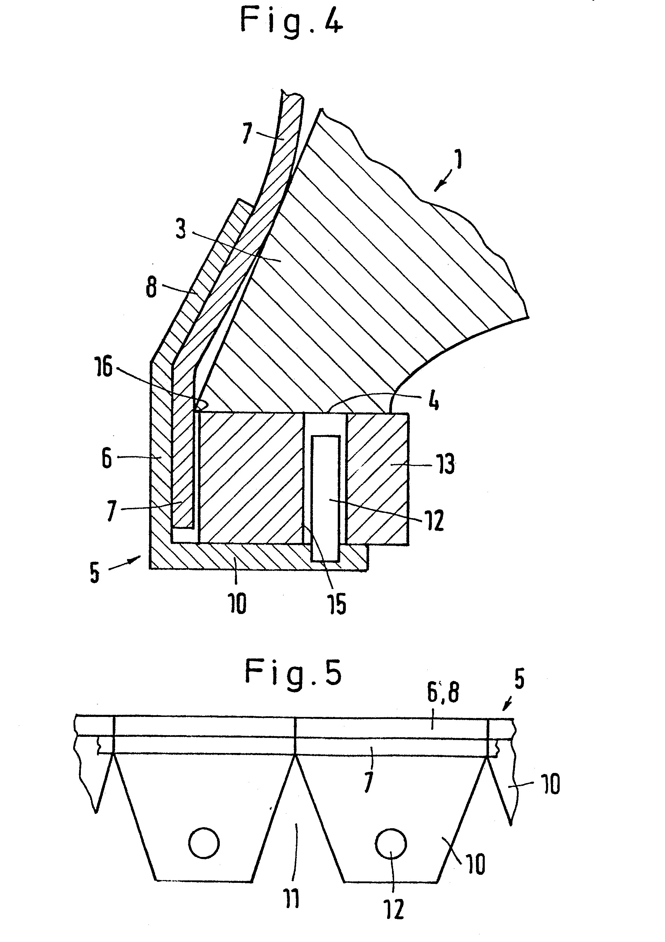

In Figur 1 ist ein Pferdehuf 1 mit seiner Außenfläche 2 dargestellt, die in charakteristischer Weise von oben nach unten sich konisch erweitert. Aus Figur 4 ist im Schnitt durch einen Randbereich des Hufes zu erkennen, daß der Huf mit der außen umlaufenden Hornwand 3 in einer im wesentlichen hufeisenförmig umlaufenden Sohle die tragende Aufstandsfläche 4 hat, während der innere Sohlenteil etwas nach oben gewölbt verläuft.

Ein erfindungsgemäßer Hufschuh ist in Figur 1 in Befestigungsstellung am Huf dargestellt. Er besitzt ein außen umlaufendes Metallprofil 5, das (Siehe Figur 4) eine lotrecht stehende Außenwand 6 aufweist. Diese läuft hufeisenförmig um den Huf herum und überragt, wie insbesondere Figur 4 zeigt, die Aufstandsfläche 4 des Hufes, so daß der Huf allseitig von der Außenwand 6 umschlossen ist. Dadurch wird mittels der zwar geringfügig biegeelastischen, aber sehr steifen Metallwand 6 der Hufschuh in seitlicher Richtung fest am Huf gehalten. Die Befestigung des Hufschuhes in lotrechter Richtung erfolgt über Kunststofflaschen 7, die auf der Innenseite der Metallwand 6 befestigt sind, wie dies die Fig. 4 zeigt. Diese Befestigung kann durch Verkleben oder vorzugsweise vulkanisieren erfolgen. Die Laschen 7 (in Fig. 4 von der Hufaußenfläche 2 abgehoben dargestellt) werden z. B. mit Sekundenkleber auf der Hufaußenfläche 2 befestigt und sichern den Hufschuh gegen Abfallen.

Am oberen Rand der Außenwand 6 sind Aufzüge 8 vorgesehen, die in Form von deckungsgleich mit den Laschen 7 nach oben ragenden Teilen der Außenwand 6 ausgebildet sind. Diese stehen zunächst in Verlängerung der Außenwand 6, also senkrecht nach oben, und werden nach Befestigen des Hufschuhes, vor der Verklebung der Laschen 7 durch Anhämmern an dieHufform angepaßt und liefern einen zusätzlichen Halt. Zwischen den einzelnen Laschen 7 bwz. Aufzügen 8 sind nach oben sich erweiternde Schlitze 9 vorgesehen, die erforderlich sind, um die Laschen 7 und Aufzüge 8 der konischen Form der Hufaußenfläche 2 anpassen zu können.

Am unteren Rand der Metallwand 6 sind senkrecht zu dieser nach innen, also zum Sohleninneren hin ragende Laufflächensegmente 10 angeordnet, die einstückig mit der Metallwand 6 in Form eines Winkelprofiles hergestellt sind. Die Laufflächensegmente 10 sind mit dreieckförmigen Schlitzen 11 voneinander getrennt, wie dies die Bodenansicht der Fig. 2 zeigt. Beim Biegen des Metallprofiles 5 in die Hufeisenform werden diese Schlitze 11 mehr oder weniger geschlossen.

/in den Figuren 3-5
In der dargestellten Ausführungsform des erfindungsgemäßen Hufschuhes weisen die Laufflächensegmente 10 Bolzen 12 auf, die, wie die Fig. 4 zeigt, lotrecht stehen, also parallel zur Außenwand 6. Die Bolzen sind auf beliebige Weise mit den Lauffächensegmenten 10 verbunden, beispielsweise in diese eingelassen, wie dies Fig. 4 zeigt.

In Fig. 3 ist die Sohle 13 in Draufsicht dargestellt. Die Sohle ist etwa ringförmig in Form eines Hufeisens ausgebildet und nahe den hinteren Enden mit einem integral aus demselben Material bestehenden Riegel 14 geschlossen. Der Riegel 14 besteht wie die Sohle aus elastischem Kunststoffmaterial und sichert die Hufschuhkonstruktion gegen Aufspreizen der hinteren Enden, die zumAbreißen des Hufschuhes führen könnten.

In der Sohle 13 sind lotrechte Bohrungen 15 vorgesehen, die an den Stellen der Bolzen 12 sitzen. Wird die Sohle 13 von oben auf die Lauffächensegmente 10 gelegt, so greifen die Bolzen 12 in die Bohrungen 15 und sichern einen festen Formschlußeingriff des Metallprofiles 5 mit der Sohle 13 in Richtung der Sohlenebene. Die komplette Anordnung ist aus Fig. 4 zu ersehen. Es ist dort ersichtlich, daß der Huf 1 mit seiner Aufstandsfläche 4 auf der Sohle 13 steht. Diese liegt auf den Lauffächensegmenten 10, welche über die Außenwand 6 und die Laschen 7 an der Hufaußenfläche 2 befestigt sind. Daher ist die Sohle 13 zwischen den Lauffächensegmenten 10 und dem Huf 1 in lotrechter Richtung sicher gehalten. Zusammen mit dem Formschlußeingriff 12, 15 ergibt sich eine in allen Richtungen sichere Verbindung zwischen der Sohle 13 und dem Metallprofil 5.

In Fig. 5 ist in Draufsicht ein Metallprofil 5 in gerader, noch nicht gebogener Lage dargestellt. An der Außenwand 6 bzw. den Aufzügen 8 sind die Laschen 7 bereits vorgefertigt angebracht. Die Bolzen 12 sind auf den Lauflächensegmenten 10 befestigt. Ein solches Profil kann endlos vorgefertigt werden. Im Falle des dargestellten Hufschuhes wird ein Abschnitt mit sieben Lauflächensegmenten zugeschnitten.

Die Herstellung eines solchen Hufschuhes nach den erforderlicherweise einzuhaltenden genauen Maßen des individuellen Hufes 1 ist sehr einfach.

Zunächst wird der Huf 1 gesäubert, gegebenenfalls in seiner Aufstandsfläche 4 begradigt und dann beispielsweise auf ein Stück Pappe gestellt. Sodann wird am äußeren Rand 16 des Hufes umlaufend auf die Platte eine Linie gezogen.

Anhand dieser dem Rand 16 entsprechenden Linie wird eine Sohle 13 aus einer Kunststoffplatte geeigneten Materiales und geeigneter Dicke ausgeschnitten, und zwar in die aus Fig. 3 ersichtliche Form.

Ein Abschnitt des Metallprofiles 5 mit (für den dargestellten Hufschuh) sieben Lauflächensegmenten 10 wird ebenfalls entlang der auf Pappe gezeichneten Linie entsprechend dem Hufrand 16 in die aus Fig. 2 ersichtliche Form gebogen. Dann wird die Sohle 13 von oben auf die Bolzen 12 gelegt, und deren Stellungen werden markiert. An den markierten Stellen werden Bohrungen 15 geeigneten Durchmessers eingebracht, und es kann die Sohle in Formschlußverzahnung auf das Metallprofil gelegt werden. Es ergibt sich dann die Konfiguration, die in Fig. 3 in Draufsicht dargestellt ist, wobei in dieser Figur das Metallprofil nur in einem Abschnitt gezeigt ist.

*1L*

Die Herstellung des erfindungsgemäßen Hufschuhes kann wesentlich vereinfacht und verbilligt werden. Es können Sohlenrohlinge in mehreren Größen fabrikmäßig vorgefertigt werden. Für einen bestimmten Huf wird dann ein Rohling entsprechender Größe ausgesucht und nur noch geringfügig auf die individuelle Sohlenform des Hufes beschnitten. Dadurch wird die Beschneidearbeit verringert und der Abfall beim Zuschneiden ebenfalls verringert. Derartige Sohlenrohlinge besitzen bereits die in Figur 3 dargestellte Grundform und sind lediglich im äußeren Umfang etwas größer, um dort auf die individuelle Sohlenform zugeschnitten zu werden.

Zum Zuschneiden der Sohle bzw. des Rohlinges kann der Huf des Pferdes direkt auf die Platte bzw. den Rohling gestellt werden und darauf die Umrißlinie gezeichnet werden, was die Herstellung weiter vereinfacht. Um beim Anzeichnen ein Verrutschen zu vermeiden, kann die Platte bzw. der Rohling zum Beispiel mittels einer Haftfolie vorübergehend unter den Huf geklebt werden.

Das Biegen des Metallprofiles 5 in die gewünschte individuelle Hufform erfolgt am einfachsten dadurch, daß das in gestreckter gerader Form vorgefertigte Metallprofil um die fertig zugeschnittene Sohle 13 herum gebogen wird. Dabei wird die Sohle als Lehre zum Biegen des Metallprofiles verwendet. Auf diese Weise wird das Biegen des Metallprofiles wesentlich erleichtert.

Beim Biegen des Metallprofiles wird vorteilhaft so vorgegangen, daß das Metallprofil stückweise gebogen wird, und zwar jeweils nacheinander nur einer der dreieckförmigen Schlitze 11 durch Biegen verkleinert wird. Dies geschieht am besten dadurch, daß mit einer Zange jeweils zwei benachbarte Vorsprünge 12 ergriffen und zusammengedrückt werden. Wie Versuche zeigen, läßt sich auf diese Weise das Metallprofil 5 sehr einfach und sehr schnell an die vorgefertigte Sohle 13 exakt anpassen.

Die somit erhaltene Anordnung wird unter den Huf gesetzt. Die Aufzüge 8 werden mit einem Hammer der Hufaußenfläche 2 angepaßt, und es werden die Laschen 7 verklebt.

Die Verklebung der Laschen 7 auf der Hufaußenfläche 2 erfolgt in sehr einfacher Weise durch Anbringen eines Tropfens eines Klebers, der sehr schnell abbindet und zum Beispiel im Handel als "Sekundenkleber"erhältlich ist. Die dadurch erhaltenen Klebestellen sichern den festen Halt der Laschen 7 auf der Hufaußenfläche 2 und sichern dadurch die Hufschuhkonstruktion in vertikaler Richtung am Huf.

Auf diese Weise ergibt sich also mit einfachsten Mitteln und relativ wenigen Handgriffen eine individuell angepaßte Hufschuhkonstruktion, die hervorragende Halte- und Trageigenschaften aufweist.

Die erfindungsgemäße Konstruktion kann gegenüber der dargestellten Ausführungsform weitgehend variiert werden.

So kann beispielsweise die Sohle 13 als geschlossene Platte ausgebildet sein, die lediglich in ihrem äußeren Rand dem Hufrand 16 entsprechend zugeschnitten ist. Die dargestellte, innen geöffnete Ringkonstruktion mit Riegel 14 ist jedoch aus hufhygienischen Gründen vorzuziehen.

Von größter Bedeutung für den erfindungsgemäßen Hufschuh ist die Formschlußverbindung der Sohle 13 mit dem Metallprofil 5, die /durch Formschlußeingriff der Sohle mit den Vorsprüngen 12 gegeben ist. Der Formschlußeingriff kann jedoch auf vielfältige Weise variiert werden.

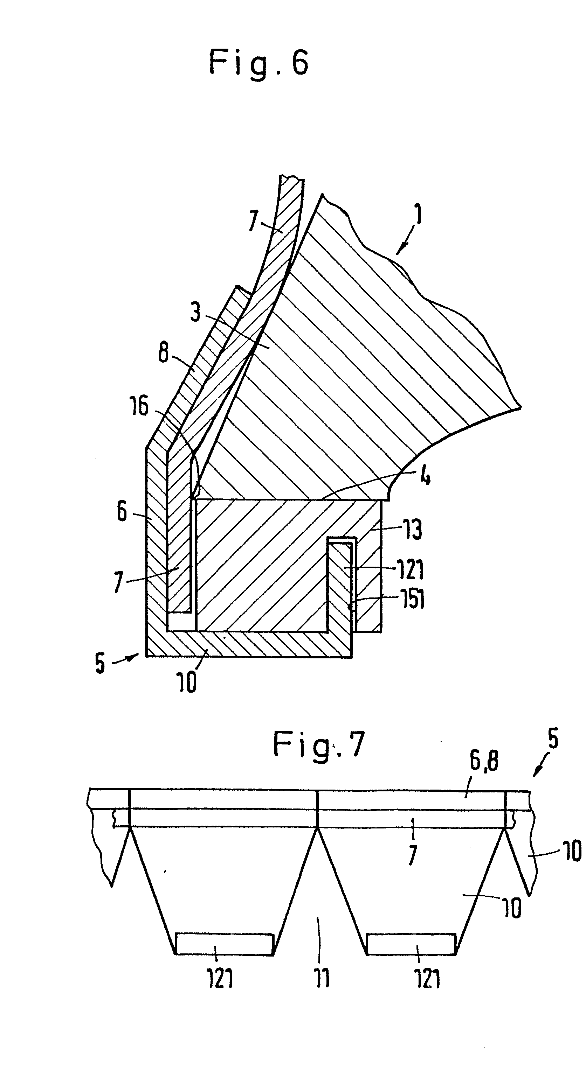

In den Figuren 6 und 7 ist eine Variante dargestellt, in der die Vorsprünge 121 als integral mit den Laufflächensegmenten 10 ausgebildete Laschen vorgesehen sind, die gegenüber den Segmenten 10 rechtwinklig nach oben umgebogen sind. Diese Vorsprünge 121 greifen ebenso wie bei der Ausführungsform der Figur 4 in Ausnehmungen 151 der Sohle 13. Die Ausnehmungen 151 sind jedoch in diesem Ausführungsbeispiel oben geschlossen und nicht nach oben als Bohrungen durchgehend geöffnet wie beim Ausführungsbeispiel der Figur 4.

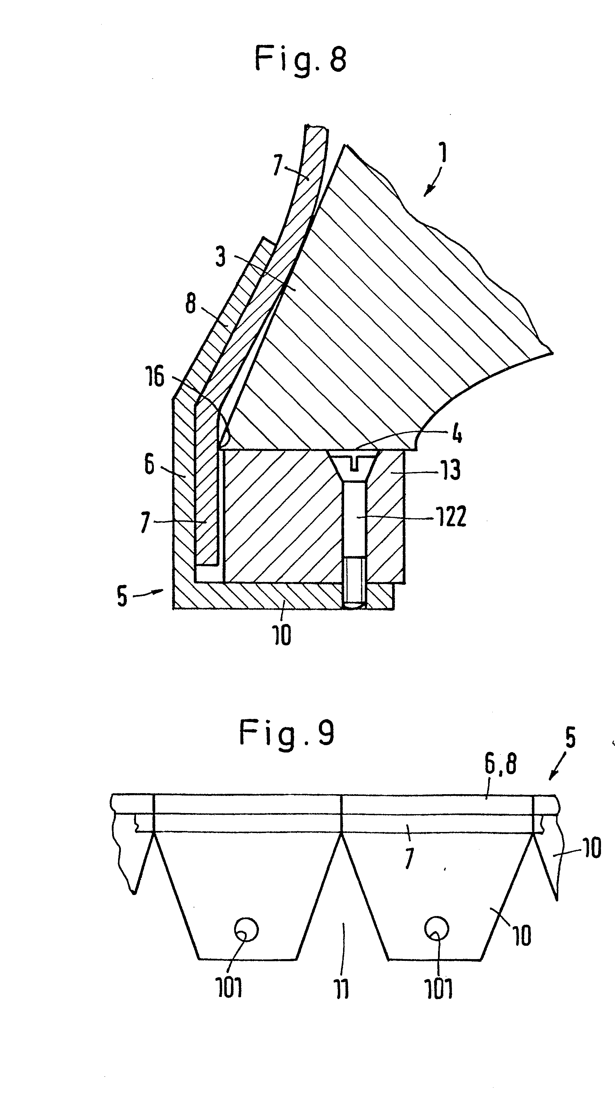

Ein weiteres Ausführungsbeispiel ist in den Figuren 8 und 9 dargestellt. Dieses Ausführungsbeispiel entspricht weitgehend dem der Figuren 4 - 5. Die Bolzen 12 sind durch Schrauben 122 ersetzt, die mit einem unteren Gewindeteil in Gewindelöchern 101 der Laufflächensegmente 10 eingeschraubt sind. Die Schrauben 122 können in vorbereitete Bohrungen in der Sohle 13 eingesetzt sein oder beispielsweise auch mit selbstschneidender Spitze durch die unvorbereitete Sohle geschraubt werden.

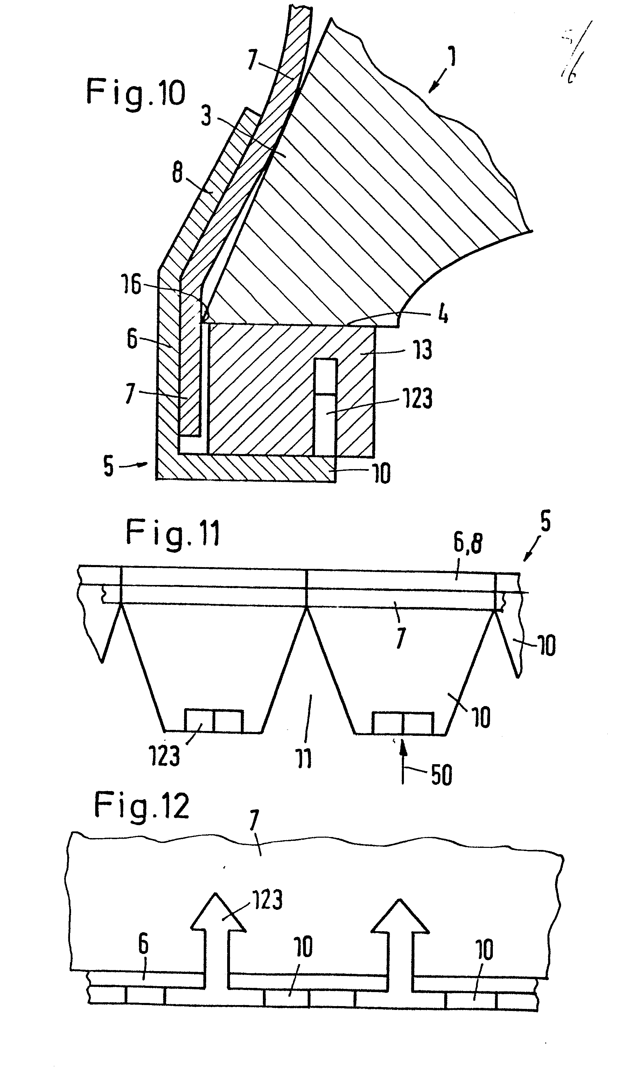

Eine weitere Variante ist in den Figuren 10 und 11 dargestellt, die bis auf die unterschiedliche Ausbildung der Vorsprünge den Figuren 4 und 5 entsprechen. Figur 12 zeigt zu Figur 11 eine Ansicht in Richtung des Pfeiles 50.

Wie aus den Figuren 10 - 12 ersichtlich, sind bei dieser Ausführungsform die Vorsprünge 123 ähnlich wie bei der Ausführungsform der Figuren 6 und 7 integral mit den Laufflächensegmenten 10 ausgebildet und and deren Enden rechtwinklig nach oben abgebogen.

Die Vorsprünge 123 sind jedoch nicht als rechtwinklige Platten ausgebildet wie die Vorsprünge 121 gemäß den Figuren 6 und 7, sondern sind als aufrechtstehende Pfeile ausgebildet, die in ihrem unteren Teil einen schmalen Schaft aufweisen und an ihrem oberen Ende eine Pfeilspitze mit zwei seitlichen Widerhaken aufweisen. Bei der Montage der Sohle 13 am Metallprofil 5 wird die Sohle von oben auf die Spitzen der pfeilförmigen Vorsprünge 123 aufgesetzt und dann nach unten gedrückt. Die Pfeile schneiden in das unvorbereitete Material der Sohle 13 ein.

Diese Ausführungsform hat den Vorteil, daß in der Sohle 13 keine Ausnehmungen vorgefertigt werden müssen und daß durch die Widerhaken an den Pfeilspitzen der Vorsprünge 123 die Sohle unverlierbar am Metallprofil befestigt wird, was insbesondere für die Montage von Vorteil ist.

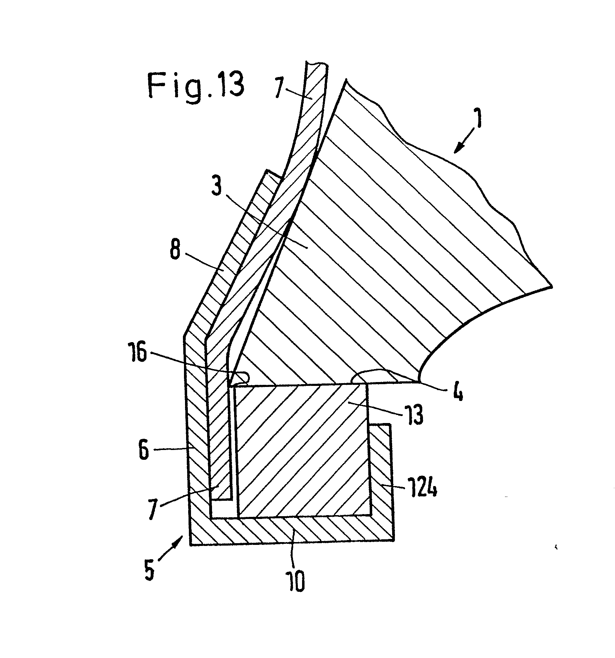

In Figur 13 ist eine weitere Variante dargestellt. Hier sind die Vorsprünge 124 entsprechend denen der Figuren 6 bis 7 ausgebildet und bestehen beispielsweise aus rechteckigen Platten, die integral an den Enden der Laufflächensegmente 10 vorgesehen sind. Im Unterschied zur Ausführungsform der Figuren 6 bis 7 umgreift die Sohle 13 jedoch die Vorsprünge 124 nicht allseitig, sondern ist nur im Innenraum des Metallprofiles zwischen der Außenwand 6 und den Vorsprüngen 124 formschlüssig gehalten. Diese Ausführungsform ist relativ einfach, und es ergeben sich insbesondere bei der Montage Vorteile, da die Vorsprünge 124 nicht mühsam in vorbereitete Ausnehmungen der Sohle eingepaßt werden müssen. Es können sich aber bei dieser Ausführungsform der Figur 13 Nachteile dadurch ergeben, daß die Sohle 13 und das U-Profil 5 in Umfangsrichtung, also in Richtung senkrecht zur Zeichnungsebene, gegenseitig verrutschen können, wodurch sich die Sohlenform verändern kann.

Im dargestellten Ausführungsbeispiel wird der Hufschuh in lotrechter Richtung am Huf 1 durch Verklebung der Laschen 7 mit der Hufaußenfläche 2 gehalten. Als Halterungsmittel für die lotrechte Halterung können jedoch auch andere Konstruktionen verwendet werden, z.B. leicht lösbare Knöpfverbindungen oder dergleichen, wie sie in den deutschen Patentanmeldungen P 34 24 726.2 oder P 34 06 733.7 dargestellt sind.

Ferner können gegebenenfalls die Aufzüge 8 der dargestellten Ausführungsform entfallen. Die Laufflächensegmente 10 sind im dargestellten Ausführungsbeispiel in Draufsicht gemäß Fig. 5 von der Außenwand 6 weg sich verjüngend ausgebildet, um in den dreieckigen Schlitzen 11 das Biegen in die Hufform zu ermöglichen. Die Laufflächensegmente 10 können jedoch auch von anderer Form sein, beispielsweise in Draufsicht rechteckig, dann jedoch im Abstand voneinander an der Außenwand 6 befestigt.

# PATENTANWALT
## DIPL. PHYS. K. SCHAEFER
## (DIPL. ING. H. SCHAEFER    ) 

D-2000 HAMBURG 70, GEHÖLZWEG 20
POSTFACH (P.O. BOX) 701542
TELEFON: (040) 656 2051
TELEX: 2 164 966 pats d
TELEGRAMMADRESSE: PATENTIWE

DATUM/DATE  17. Oktober 1985
UNSER ZEICHEN/OUR REF.  KSCH/N
IHR ZEICHEN/YOUR REF.:

PATENTANWALT SCHAEFER  POSTFACH 70 15 42  D-2000 HAMBURG 70

PETER STÜBBE

Schenkenberger Weg 17, D-2061 Bliestorf

---

ANSPRÜCHE:

1. Hufschuh für Pferde, mit einem am Rand umlaufenden biegeelastischen Metallprofil, das eine im wesentlichen lotrechte Außenwand aufweist, an deren unterem Rand im wesentlichen waagerecht nach innen verlaufende Lauflächen-segmente befestigt sind, auf denen im Abstand und im wesentlichen parallel zur Außenwand stehende Vorsprünge befestigt sind, und mit einer elastischen Sohle, die innerhalb der Außenwand sowie oberhalb der Lauflächen-segmente angeordnet und am Metallprofil befestigt ist, sowie mit Halterungsmitteln, die an der Außenwand befestigt sind und zur Klebebefestigung des Hufschuhes auf der Außenfläche des Pferdehufes dienen, dadurch gekennzeichnet, daß die Sohle (13) aus einem plattenförmigen Kunststoff-Halbfabrikat passend zur Umfangsform (16) der Hufsohle vorgefertigt und durch Aufstecken auf die Vorsprünge (12, 121, 122, 123, 124) mit dem an die Umfangsform (16) der Hufsohle angepaßten Metallprofil (5) verbindbar ist und daß die Außenwand (6, 7) des Metallprofiles die obere Fläche der aufgesteckten Sohle überragt.

2. Hufschuh nach Anspruch 1, dadurch gekennzeichnet, daß die Vorsprünge (12, 121) in vorbereitete Ausnehmungen (15, 151) der Sohle (13) eingreifen, die die Vorsprünge in Richtung der Sohlenebene allseitig umgreifen.

3. Hufschuh nach Anspruch 2, dadurch gekennzeichnet, daß die Vorsprünge als lotrechte Bolzen (12) und die Ausnehmungen als lotrechte Bohrungen (15) ausgebildet sind.

4. Hufschuh nach Anspruch 1, dadurch gekennzeichnet, daß die Vorsprünge (123) an ihren oberen Enden jeweils eine zum Einschneiden in das unvorbereitete Sohlenmaterial geeignete Spitze aufweisen.

5. Hufschuh nach Anspruch 4, dadurch gekennzeichnet, daß die Spitze der Vorsprünge (123) pfeilförmig mit Widerhaken ausgebildet ist.

6. Hufschuh nach Anspruch 1, dadurch gekennzeichnet, daß die Vorsprünge (122) als von oben durch die Sohle (13) in die Lauflächensegmente (10) einschraubbare Schrauben ausgebildet sind.

7. Hufschuh nach Anspruch 1, dadurch gekennzeichnet, daß die Sohle (13) ring- bzw. hufeisenförmig ausgebildet und nahe den hinteren Enden mit einem Querriegel (14) aus elastischem Material geschlossen ist.

0181522

1/4

Fig.1

Fig.2

Fig.3

# Fig.4

# Fig.5

Fig. 6

Fig. 7

Fig. 8

Fig. 9

Fig.10

Fig.11

Fig.12

Fig.13